# EUROPEAN PATENT SPECIFICATION

(11) **EP 2 599 187 B1**
(45) Date of publication and mention of the grant of the patent: **04.03.2015**
(21) Application number: 11741304.7
(22) Date of filing: 29.07.2011
(51) Int. Cl.: H02K 1/20, H02K 7/18

(54) **COOLING ASSEMBLY FOR WIND TURBINE**
KÜHLANORDNUNG FÜR EINE WINDTURBINE
ENSEMBLE DE REFROIDISSEMENT POUR TURBINE ÉOLIENNE

(30) Priority: 30.07.2010 EP 10171462
(43) Date of publication of application: 05.06.2013
(73) Proprietor: EWT IP B.V., 3821 AA Amersfoort (NL)
(72) Inventor: VAN DEN BRINK, Alfred, NL-3771 RN Barneveld (NL); SMEENK, Coenraad Louis, NL-3511 NN Utrecht (NL)
(74) Representative: Nederlandsch Octrooibureau
(86) International application number: PCT/NL2011/050546
(87) International publication number: WO 2012/015306

(56) References cited:
- EP-A1- 2 073 348
- US-A1- 2004 012 272
- US-A1- 2004 135 441
- US-A1- 2007 024 132

## Description

### Field of the invention

The present invention relates to a cooling assembly for a wind turbine. More in particular, the present invention relates to a cooling assembly for cooling a generator in a (e.g. directly driven) wind turbine, the cooling assembly comprising a stator base part, a plurality of stator coil elements of the generator being attached in operation to a surface of the stator base part, the cooling assembly further comprising a conduit assembly having a plurality of conduits for transporting a cooling fluid.

In a further aspect, the present invention relates to a method of assembling a cooling system in a directly driven generator of a wind turbine, and to a wind turbine.

### Prior art

US-A-2004/012272 discloses a cooling assembly for electrical machines, such as motors or generators. One embodiment discloses a cooling system with cooling pipes arranged in an axial orientation of the machine. A further embodiment discloses a single cooling tube, being wound in tangential direction of the machine.

EP-A-2 073 348 discloses an electric motor having an internal cooling. The stator body comprises a wound cooling tube, which in one embodiment is provided as a tube with an axial direction, and in a further embodiment as a single tube wound in a tangential direction.

WO 01/21956 Al discloses a wind turbine for generating electric current with the aid of a generator which is directly driven by a rotor having multiple rotor blades. The wind turbine is provided with a cooling unit which circulates cooling liquid through the stator of the generator, using axially oriented channels in the stator.

### Summary of the invention

The present invention seeks to provide an efficient solution to cooling a direct drive generator in a wind turbine. One of the aims is to prevent hot spots due to position and routing of a cooling liquid. In some known cooling systems, the fluid is routed from a center point to a part of the circumference of the stator. Between the parts hot spots may arise. In a further known cooling system, one conduit is provided running along the areas to be cooled. In this case, the temperature of the coolant used will increase along the trajectory of the conduit, and hence cooling capacity diminishes along the flow of coolant.

According to the present invention, a cooling assembly according to the preamble defined above is provided, wherein the stator base part having a cylinder shaped surface is provided with a plurality of tangential grooves, wherein the plurality of conduits are positioned in the plurality of tangential grooves. The stator base part comprises m groups of n grooves, m and n being integer numbers, and m>1. Dividing the grooves (and conduits) into groups allows to provide an as uniform as possible cooling capacity over the stator base part, while also providing possibilities to firmly and securely attach the stator coil elements on the stator base part. E.g. mounting elements are provided in the stator base part between each group of n grooves for attaching the plurality of stator coil elements. Along the circumference of the stator base part, the mounting elements may also be distributed evenly, allowing a very good attachment of the stator coil elements.

In one embodiment, the plurality of conduits comprise tubes, and the plurality of conduits have been deformed from their original cross section during assembly. The plurality of stator coil elements are attached flush on the surface of the stator base part. This provides that the conduits are being deformed when assembling the cooling assembly, resulting in a large and forced contact with the stator coil elements and the stator base part, allowing a very efficient heat transfer to the cooling fluid in the conduits.

The plurality of conduits are made of copper in a further embodiment, which material provides excellent properties with respect to deformability and heat transfer. Alternative materials, like brass, aluminum, or alloys of copper or aluminum, may be used.

In one embodiment, the plurality of conduits originally have a dimension in radial direction which is larger than a depth of the plurality of grooves. This will cause deformation of the conduits when the stator coil elements are mounted flush with the surface of the stator base part. In an alternative embodiment, the plurality of stator coil elements each comprise extending elements at locations corresponding to the plurality of tangential grooves. Here, the extending elements cause the deformation of the conduits.

In a further embodiment the conduits are formed by the plurality of tangential grooves and a closing wall flush with the cylinder shaped surface of the stator base part. The closing wall e.g. comprise plates which are welded in each of the tangential grooves, or plates which cover each group of n tangential grooves. This type of embodiment is possibly more cost-effective, and more efficient in transferring heats, as no separate tubes are needed.

In an embodiment, each conduit when mounted spans the circumference of the stator base part, and the conduits of a single group are shifted over 2π/n radians relative to each other. This meshing of conduits in a single group allows a more evenly distribution of the cooling capacity over the outer surface of the stator base part.

The cooling assembly further comprises n input-output manifolds in a further embodiment interconnecting input sides and output sides of conduits from different groups of conduits, which input sides and output sides extend in a radial direction of the stator base part.. This allows to have as little number of parts as possible, and allows a consistent manner of connection to the conduits of the cooling assembly, while at the same time keeping the number of connections to be made as low as possible.

In a specific embodiment the manifolds are provided in the top three quarters of the circumference of the stator base part. E.g. when n is equal to 3, the manifolds are provided at the 4, 8 and 12 o'clock positions on the stator base part, or when n is equal to 4, the manifolds are provided at the 45°, 135°, 225° and 315° positions around the circumference of the stator base part. This allows to have a platform or the like at the bottom part of the stator base part, which allows access to other parts of the wind turbine, without hindering accessibility to the manifolds (e.g. in case of leakage).

In a group of embodiments, the cooling fluid is a water based cooling fluid, such as a mixture of water and glycol. This cooling fluid is easy to handle, and only minor further components are needed in the wind turbine (pump, heat exchanger) to properly operate the cooling assembly. In an alternative group of embodiments, the cooling assembly is pressurized, enabling the use of a compressed fluid. In an even further embodiment, the plurality of conduits is part of a evaporation based cooling system. Although possibly more or other components are needed (compressor, expander, etc.) the cooling capacity of compressed fluid cooling systems in general is higher, which allows to use e.g. conduits of a smaller cross section or increase the cooling capacity of the generator and related power output.

In a further aspect, the present invention relates to a method of assembling a cooling system in a directly driven generator of a wind turbine, comprising providing a stator base part having a plurality of tangential grooves in a surface having a cylindrical shape wherein the stator base part comprises m groups of n grooves, m and n being integer numbers, and m>1, providing a plurality of conduits in the plurality of tangential grooves, mounting a plurality of stator coil elements directly on and flush with the surface of the stator base part.

In an embodiment, the space between the stator coil element and a bottom of the tangential grooves being less than the diameter of the conduits, thereby deforming the plurality of conduits in the plurality of tangential grooves.

In an alternative embodiment, the plurality of conduits are formed by closing off the plurality of tangential grooves.

These method embodiments allow to manufacture a cooling assembly for use in a direct drive wind turbine having excellent cooling capacity and effectiveness.

### Short description of drawings

The present invention will be discussed in more detail below, using a number of exemplary embodiments, with reference to the attached drawings, in which
Fig. 1 depicts an exploded view of three parts of a direct drive generator using a cooling assembly according to an embodiment of the present invention;
Fig. 2a depicts a cross sectional view in detail of a stator base part and a conduit before assembly;
Fig. 2b depicts a cross sectional view in detail of the assembly of Fig. 2a after mounting of the stator soft iron packs;
Fig. 2c depicts a cross sectional view in detail of a further embodiment of a stator base part and a conduit before assembly;
Fig. 3 depicts a perspective view of the plurality of conduits and input/output manifolds of a cooling assembly according to an embodiment of the present invention;
Fig. 4 depicts a perspective view of stator base part as used in a cooling assembly according to an embodiment of the present invention;
Fig. 5 depicts a cross sectional view of a direct drive generator in which an embodiment of the cooling assembly according to the present invention is present;
Fig. 6a depicts a schematic view of a cooling system using a cooling arrangement according to an embodiment of the present invention;
Fig. 6b depicts a schematic view of an alternative cooling system using a evaporation based cooling arrangement according to an embodiment of the present invention;
Fig. 7a depicts a cross sectional view in detail of a stator base part according to a further embodiment of the present invention; and
Fig. 7b depicts a cross sectional view in detail of a stator base part according to a further alternative embodiment of the present invention.

### Detailed description of exemplary embodiments

In direct drive wind turbines, the stator and rotor of the generator are large in size. Usually, the stator comprises coils which during operation of the wind turbine heat up. The present invention embodiments provide for an efficient manner of cooling the stator coils during operation. A wind turbine having a direct drive generator may be efficiently manufactured and operated using a cooling assembly according to one of the present invention embodiments.

The cooling of the stator coils is achieved in the present invention embodiments using a cooling assembly which comprises a number of elements, some of which may form part of other functional assemblies of the wind turbine.

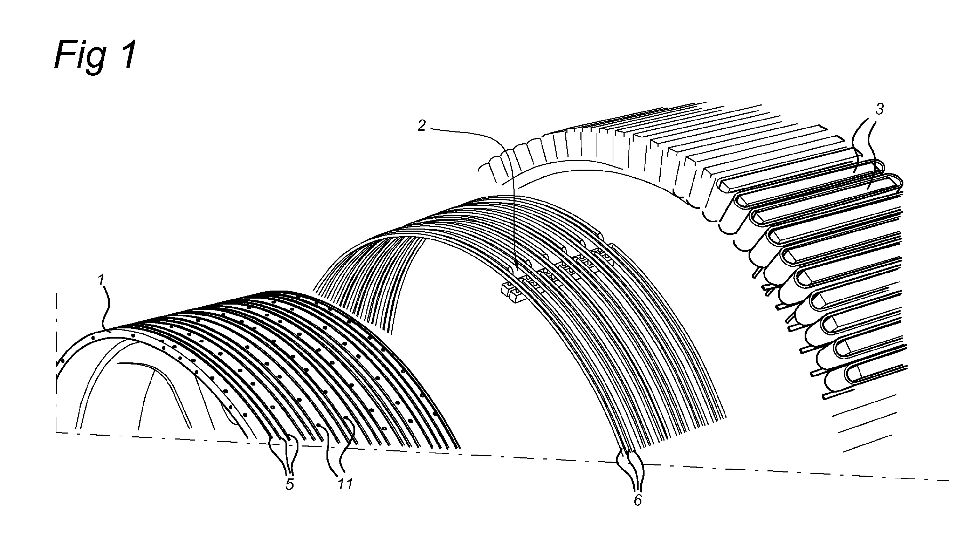

In Fig. 1 an exploded view is depicted of three parts of a direct drive generator using a cooling assembly according to an embodiment of the present invention. The cooling assembly comprises three major parts, i.e. a stator casting or stator base part 1, a conduit assembly 2 comprising a plurality of conduits 6 (or cooling tubes), and a plurality of stator coil elements 3 forming the stator side of the generator. The stator coil elements 3 need to be cooled during operation, and are also referred to as stator soft iron packs in this document. The stator coil elements 3 in operation are attached to an outside surface of the stator base part 1. The plurality of conduits 6 in operation transport a cooling fluid.

The stator base part 1 has a cylinder shaped outer surface provided with a plurality of tangential grooves 5, i.e. each groove 5 is running around the entire circumference of the cylinder shaped outer surface, perpendicular to a longitudinal axis of the cylinder shaped outer surface of the stator base part 1.

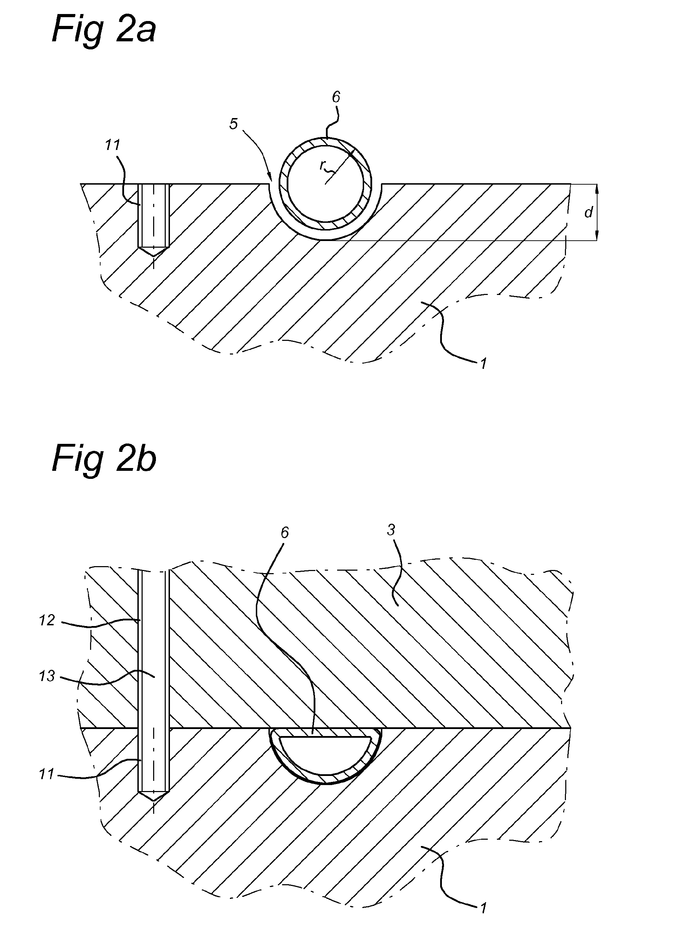

As shown in more detail in the cross sectional views of Fig. 2a and Fig. 2b, each groove 5 has a depth d in radial direction of the cylinder shaped outer surface, i.e. towards the axis of the stator base part 1. The conduit assembly 2 comprises a plurality of conduits or cooling tubes 6, which before assembly of the cooling assembly (i.e. originally, before assembly) have a diameter 2r which is larger than the depth d of the groove 5. More in general, the conduits 6, which may have a round cross section (before assembly) as shown in Fig. 2a, but may be provided as different shaped cross sections (rectangular, oval,...), have a dimension in the radial direction of the stator base part 1 which is larger than the depth d of the groove 5. When assembling the cooling assembly, the (flush) attachment of the stator coil elements 3 on the outer surface of the stator base part 1, result in a deformation of the conduits 6, as is shown in the detailed cross sectional view of Fig. 2b. The deformation of the conduits 6 assures that there is a large as possible contact area directly between conduit 6 and stator coil element 3, which greatly enhances the heat transfer capacity.

In other words, a cooling assembly may be assembled by providing a stator base part 1 having a plurality of tangential grooves 5 in an outer surface having a cylindrical shape, mounting a plurality of conduits 6 in the plurality of tangential grooves 5, the conduits 6 having a diameter which exceeds a depth (in radial direction) of the tangential grooves 5, and mounting a plurality of stator coil elements 3 directly on and flush with the outside surface of the stator base part 1, thereby deforming the conduits 6.

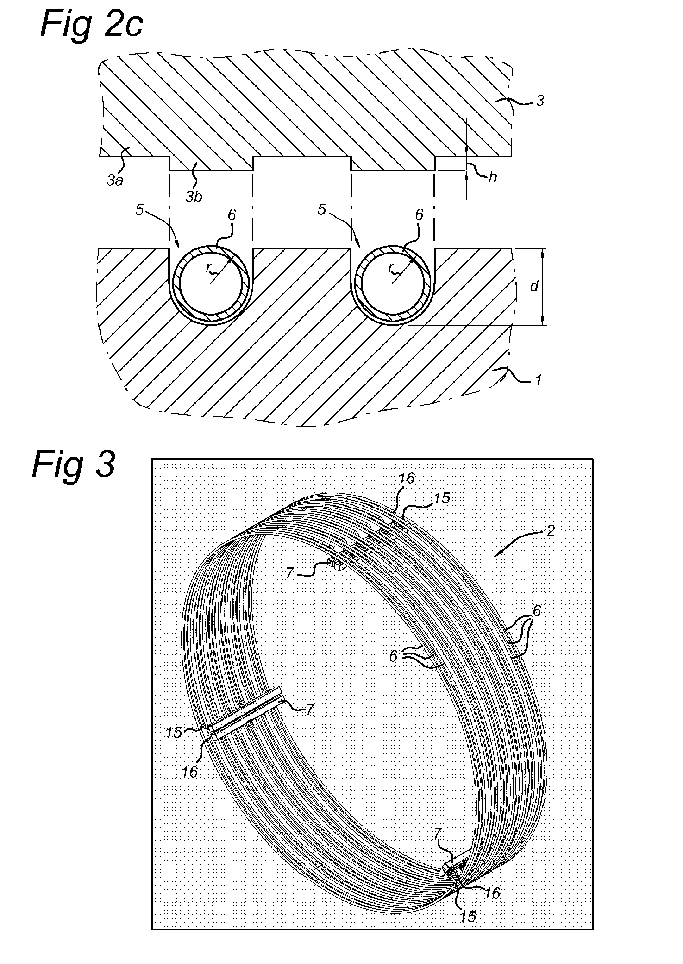

In a further group of embodiments, the deformation of the conduits 6 during assembly is accomplished in a different manner. This is shown schematically in the cross sectional view of Fig. 2c. Again, a stator base part 1 is shown, having grooves 5 in a tangential direction with a depth d. Conduits 6 are provided having a radius r equal to the half of the depth d (or even smaller). The stator coil elements 3 are constructed from plates of metal 3a, 3b (to prevent Eddy currents) which are stacked together to form the stator coil element 3. At the locations corresponding to the grooves 5 in the stator base part 1, the plates of metal form extending elements 3b which extend further than the other plates of metal 3a, e.g. with a difference h. In other words, the diameter of the conduits 6 is larger than the space between stator base part 1 and the stator coil element 3 at the locations of the grooves 5 (2r > d-h). As a result, when the stator coil elements 3 are tightly attached to the stator base part 1, the conduits 6 in the grooves 5 will deform. A tight (thermal) coupling of conduits 6 and stator coil element 3 is thus obtained, even further improved by the tight contact formed between conduit 6 and surface of the groove 5 which enhances the thermal coupling between stator base part 1 and stator coil element 3.

In the embodiments described above with reference to Fig. 2a-c, the stator base part 1 has a cylinder shaped surface provided with a plurality of tangential grooves 5, wherein the plurality of conduits 6 are positioned in the plurality of tangential grooves 5 and the plurality of conduits 6 have been deformed from their original cross section during assembly. The plurality of stator coil elements 3 are attached flush on the surface of the stator base part 1. The space between the stator coil element 3 and a bottom of the tangential grooves 5 is in all embodiments less than the diameter of the conduits 6. This assures sufficient deformation of the conduits 6 to obtain an as large as possible flush contact with the stator soft iron packs 3. Furthermore, contact is also provided with the stator base part 1 which can provide additional indirect cooling capacity for the stator soft iron packs 3 towards the conduits 6.

As shown in the perspective view of Fig. 1, the stator base part 1 is provided with grooves 5 for accommodating the conduits 6 of the conduit assembly 2 on its outer surface. In between groups of tangential grooves 5 (groups of three grooves shown in Fig. 1) mounting elements in the form of holes 11 are present, allowing attachment of the stator coil elements 3 flush to the outer surface of the stator base part 1. Each stator soft iron pack 3 is provided with a number of mounting elements 12, 13 as well, e.g. in the form of mounting bores 12 through which bolts 13 can be provided for attachment in the mounting holes 11 in the stator base part 1. Alternative attachment elements 11, 12, 13, such as rivets may also be used in further alternative embodiments.

In one embodiment, the mounting holes 11 are provided at regular intervals around the outer surface of the stator base part 1, and between each group of three conduits 6. The stator soft iron packs 3 each are elongate packs, which are mounted in the axial direction of the stator base part, i.e. perpendicular to the tangential direction of the conduits 6. This configuration assures that the stator soft iron packs 3 can be mounted flush with the outer surface of the stator base part 1, and at the same time provide sufficient possibility to deform the conduits 6 in the grooves 5. Fig. 2b provides a cross sectional view of the cooling assembly elements after attachment of the stator soft iron packs 3 on the stator base part 1.

The material of the conduits 6 is copper in one embodiment of the present invention. This material has appropriate heat transfer characteristics, and is also suitable for the intended deformation. Alternative materials include, but are not limited to aluminum, brass, copper or aluminum alloys, etc.

Fig. 3 shows a perspective view of the conduit assembly 3, comprising a plurality of conduits 6 and multiple input/output manifolds 7. In the embodiment shown in Fig. 1 and 3, six groups of each three conduits 6 are provided, which together with three manifolds 7 form the conduit assembly 2. In a single group of conduits 6, each conduit 6 when mounted spans the entire circumference of the stator base part 1, and the conduits 6 of a single group are shifted over 2π/3 radians relative to each other. In other words, the conduits 6 within a single group are meshed together in parallel. Manifolds 7 are provided at three positions at the inside of the stator base part 1 (in the embodiments shown), and are interconnected with input sides 15 and output sides 16 of the conduits 6 for feeding cooling fluid into input sides 15 and collecting warmed up cooling fluid from output sides 16 of each conduit 6. The manifolds 7 are mounted in an axial direction of the stator base part 1, i.e. parallel to the rotation symmetric axis of the stator base part 1 (and perpendicular to the tangentially oriented conduits 6).

In more general terms, m groups of n conduits 6 are provided according to embodiments of the present invention, wherein m and n are integer numbers larger than two (n>2). The input sides 15 and output sides 16 of each conduit extend in a radial direction of the stator base part 1, to allow attachment of the stator coil elements on one side, and connection to the manifolds 7 on the other side of the stator base part 1.

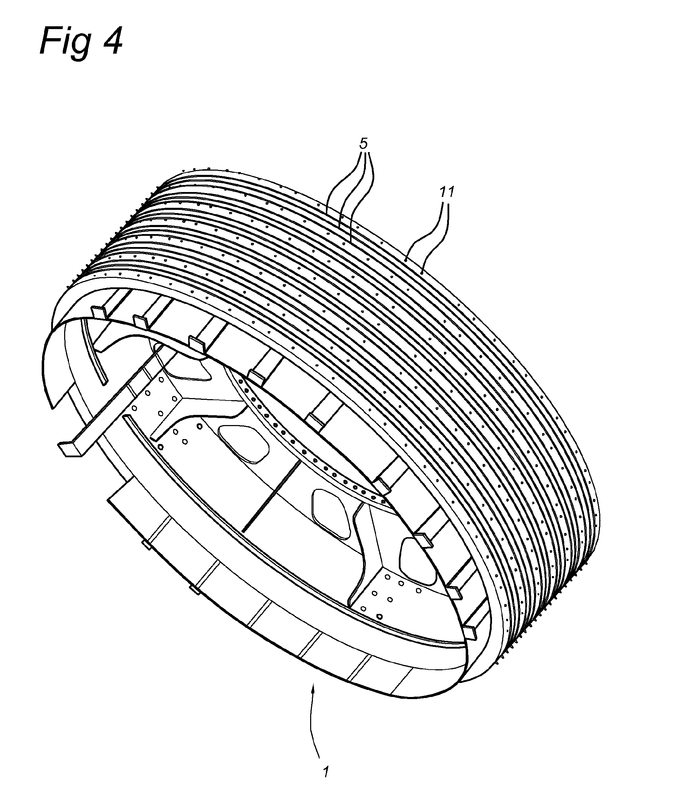

In the perspective view of Fig. 4 it is depicted that the manifolds 7 are positioned on the inner side of the stator base part 1. Connections to the conduits 6 are made by having the end parts 15, 16 of each conduit 6 to run through holes in the stator base part 1, and using normal piping connections between the conduits 6 and the manifolds 7. Manifolds 7 may also be provided at other locations and orientations using suitable piping connections to the input sides 15 and output sides 16.

These embodiments allow to insert cool water at multiple locations using the manifolds 7, evenly spaced around the circumference of the stator base part 1. Within a group of three conduits, the cooling capacity is thus spatially shifted over the full circumference of the stator base part 1. Furthermore, also cooling capacity is spread in the axial direction over the outer surface of the stator base part 1, by the feed of cooling fluid to each of the m groups of conduits 6 using the manifolds 7. In the embodiment shown, the manifolds 7 are provided at the 4, 8 and 12 o'clock positions along the circumference of the stator base part 1. In more general terms, the manifolds 7 are provided in the top three quarters of the circumference of the stator base part 1. E.g. as an alternative, four groups of conduits are present (n=4) and the manifolds are provided at the 45°, 135°, 225° and 315° positions around the circumference of the stator base part 1. Even when the interconnections between manifolds 7 and conduits 6 would be leaky, these positions would allow easy access for repair from within the stator base part 1 in the wind turbine (unlike a position at 6 o'clock where structural elements are present to provide access to other wind turbine parts, such as the rotor nacelle).

This dispersion of cooling capacity over the entire surface of the stator base part 1 provides a very uniform cooling of the stator soft iron packs 3 in a much more efficient manner than cooling systems which are used today. Hot (and cold) spots are prevented effectively.

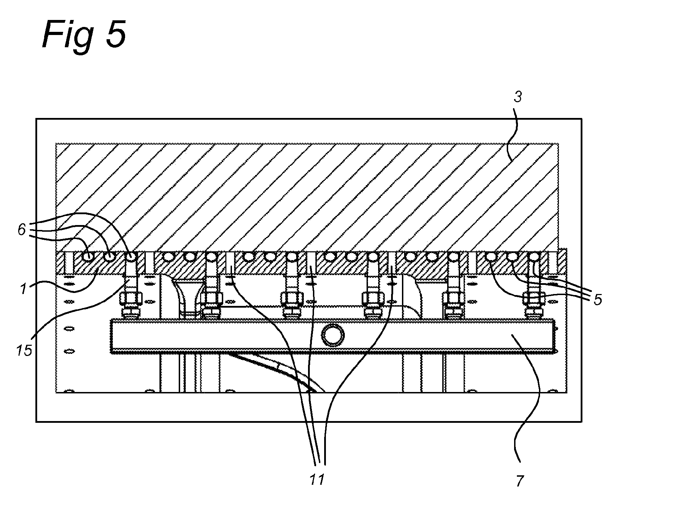

This evenly distribution is already illustrated in the views of Fig. 3 and 4, and the cross sectional view of Fig. 5 depicts this in even more detail. Clearly visible are the conduits 6 in the grooves 5 of the stator base part 1, which provide for a very good thermal contact between cooling fluid present in the conduits 6 and the stator soft iron packs 3. This figure also illustrates the mounting holes 11 as part of the stator base part 1, the stator soft iron packs 3 being mounted to the stator base part 1 using these mounting holes 11. Also shown is that the right conduits 6 of each group of conduits 6 is fed using a single manifold 7 using respective input sides 15 of each conduit 6. 6

Furthermore, as the cooling assembly is symmetrical in many ways, manifolds 7 and conduits 6 of the same size and dimensions can be used, which provides for a more economic and easy manufacture of the entire wind turbine. Also, the number of connections of conduits 6 to the manifolds is limited (3 x 6 in the embodiment shown in the figures), which lowers the chance of leakages as compared to existing cooling arrangements.

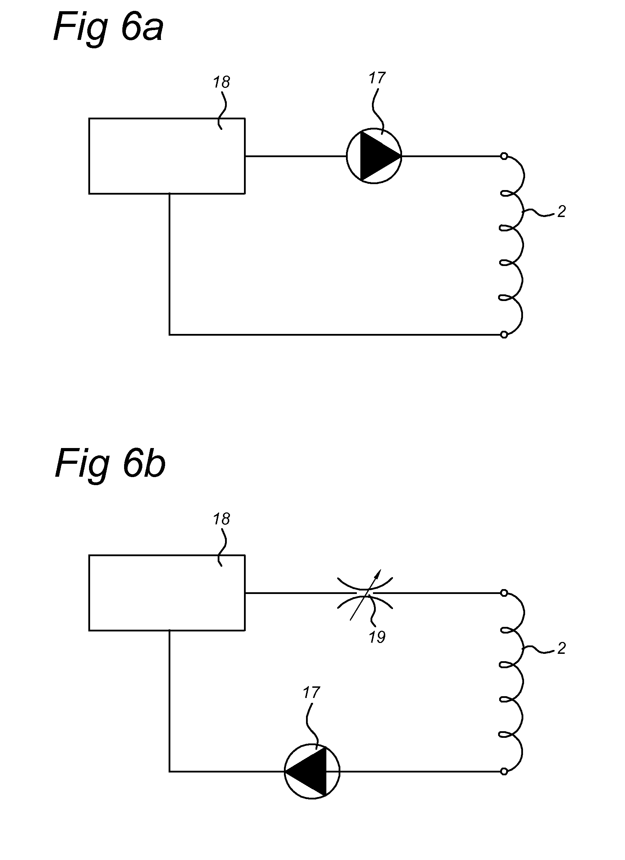

In the embodiments described above, it is assumed that the cooling system utilizing a cooling assembly as claimed also comprises a pump 17 and a heat exchanger (radiator) 18, both connected to the manifolds 7 of the conduit assembly 2 as shown in the block diagram of Fig. 6a, to allow water to be used as cooling fluid. The heat exchanger 18 may be provided externally from the wind turbine housing, or in an internal heat exchange duct through which outside air is led freely or in a forced manner. The cooling fluid may also be a water based cooling fluid, e.g. a mixture of water and glycol (and possibly further additives). Furthermore, the cooling assembly may be pressurized to ensure proper heat transport in the cooling assembly, e.g. using the pump 17 and an expansion tank (not shown).

In an alternative embodiment, which is shown schematically in the block diagram of Fig. 6b, the cooling fluid is applied under pressure, i.e. a compressed fluid is used, as in known air conditioning and refrigeration systems (i.e. the cooling assembly is pressurized, and operates as an evaporation based cooling system). The compressed fluid is allowed to expand in the plurality of conduits 6 (i.e. the plurality of conduits 6 are used as expander and vaporizer). In other words, the cooling assembly is a phase change cooling system. As cooling fluid in this group of embodiments, fluids known to be used as refrigerants maybe used, such as carbon dioxide, ammonia, R134a, etc. As will be apparent, the cooling system will then comprise elements which are known as such in compressed fluid heat exchange systems, such as an expansion valve 19 positioned upstream of the plurality of conduits 6, a compressor 17 and a condenser/ heat exchanger 18. These embodiments may provide a higher cooling capacity (up to a ΔT of 80°C), as a result of which e.g. smaller conduits 6 (and grooves 5) may be used, a lower number of (groups of) conduits 6, or the cooling capacity of the generator is increased which in turn allows to increase the output power capacity. It is noted that such an evaporation based cooling system as described with reference to Fig. 6b may also be applied in other applications which e.g. normally use a liquid based cooling system.

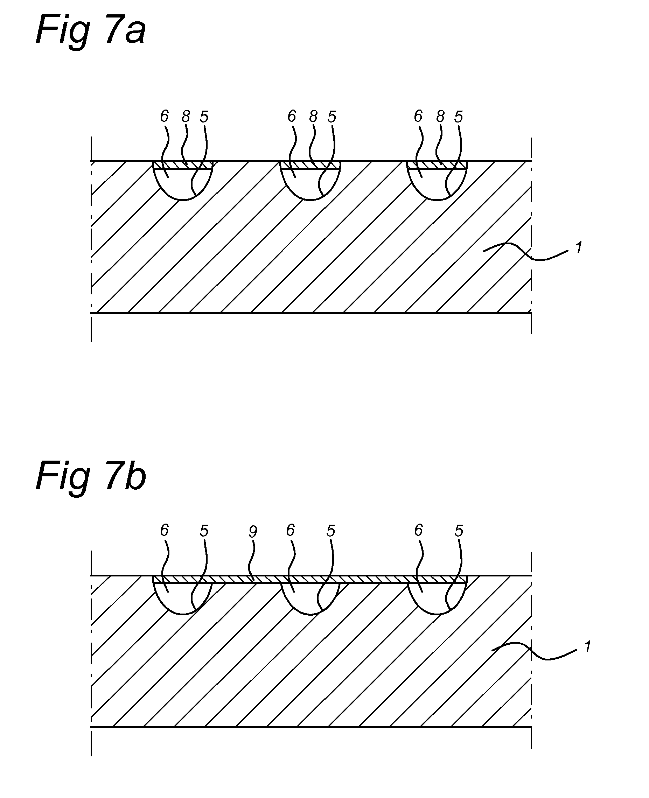

Fig. 7a and b depict a cross sectional view in detail of a stator base part 1 according to a further embodiments of the present invention. In this group of embodiments, no tubes are positioned inside the plurality of grooves 5, but the grooves 5 are made into conduits by closing them off with a closing wall 8, 9. The closing wall 8, 9 is flush with the cylinder shaped surface of the stator base part 1, to allow efficient mounting of the stator soft iron packs 3 for effective heat transfer. In the embodiment shown in Fig. 7a, each groove 5 is closed off by a separate closing wall 8. In the embodiment alternative of Fig. 7b, each group of n tangential grooves 5 is closed off using a closing wall 9. A small amount of material is removed between adjacent grooves 5 of a group of grooves 5, or the stator base part 1 is formed to provide space for the closing wall 9. The closing wall 8, 9 can e.g. be provided using a plate of material similar to that of the stator base part 1, which is welded onto the stator base part 1. As the mounting holes 11 are provided in between groups of n tangential grooves 5, the closing walls 8, 9 do not interfere with the mounting of the soft iron stator packs 3. It will be clear that further modifications can be made, e.g. using edges or recessions in the grooves 5 allowing easy holding of the closing walls 8, 9 before actual welding thereof.

The present invention embodiments have been described above with reference to a number of exemplary embodiments as shown in the drawings. Modifications and alternative implementations of some parts or elements are possible, and are included in the scope of protection as defined in the appended claims.

## Claims

1. Cooling assembly for cooling a generator in a wind turbine, the cooling assembly comprising a stator base part (1), a plurality of stator coil elements (3) of the generator being attached in operation to a surface of the stator base part (1), the cooling assembly further comprising a conduit assembly (2) having a plurality of conduits (6) for transporting a cooling fluid,
the stator base part (1) having a cylinder shaped surface provided with a plurality of tangential grooves (5), wherein the plurality of conduits (6) are formed in the plurality of tangential grooves (5), wherein the stator base part (1) comprises m groups of n grooves (5), m and n being integer numbers, and m>1.

2. Cooling assembly according to claim 1, wherein the plurality of conduits (6) comprise tubes, and the plurality of conduits (6) have been deformed from their original cross section (2r) during assembly.

3. Cooling assembly according to claim 2 , wherein the plurality of conduits (6) are made of copper.

4. Cooling assembly according to claim 2 or 3, wherein the plurality of conduits (6) originally have a dimension in radial direction (2r) which is larger than a depth (d) of the plurality of grooves (5).

5. Cooling assembly according to claim 1, wherein the conduits (6) are formed by the plurality of tangential grooves (5) and a closing wall (8; 9) flush with the cylinder shaped surface of the stator base part (1).

6. Cooling assembly according to any one of claims 1-5, wherein the plurality of stator coil elements (3) each comprise extending elements (3b) at locations corresponding to the plurality of tangential grooves (5).

7. Cooling assembly according to any one of claims 1-6, wherein mounting elements (11) are provided in the stator base part (1) between each group of n grooves (5) for attaching the plurality of stator coil elements (3).

8. Cooling assembly according to any one of claims 1-7, wherein each conduit (6) when mounted spans the circumference of the stator base part (1), and the conduits (6) of a single group are shifted over 2π/n radians relative to each other.

9. Cooling assembly according to any one of claims 1-8, further comprising n input-output manifolds (7) interconnecting input sides (15) and output sides (16) of conduits (6) from different groups of conduits (6), which input sides (15) and output sides (16) extend in a radial direction of the stator base part (1).

10. Cooling assembly according to any one of claims 1-9, wherein the cooling fluid is a water based cooling fluid.

11. Cooling assembly according to any one of claims 1-10, wherein the plurality of conduits (6) is part of an evaporation based cooling system.

12. Method of assembling a cooling system in a directly driven generator of a wind turbine, comprising
providing a stator base part (1) having a plurality of tangential grooves (5) in a surface having a cylindrical shape, wherein the stator base part (1) comprises m groups of n grooves (5), m and n being integer numbers, and m>1;
providing a plurality of conduits (6) in the plurality of tangential grooves (5); mounting a plurality of stator coil elements (3) directly on and flush with the surface of the stator base part (1),

13. Method according to claim 12, wherein the space between the stator coil element (3) and a bottom of the tangential grooves (5) is less than the diameter (2r) of the conduits (6), thereby deforming the plurality of conduits (6) in the plurality of tangential grooves (5).

14. Method according to claim 12, wherein the plurality of conduits (6) are formed by closing off the plurality of tangential grooves (5).

15. Wind turbine having a direct drive generator, comprising a cooling assembly according to any one of claims 1-11.

## Patentansprüche

1. Kühlanordnung zum Kühlen eines Generators in einer Windturbine, die Kühlanordnung umfassend einen Statorbasisteil (1), eine Vielzahl von Statorspulenelementen (3) des Generators, die in Wirkverbindung mit einer Oberfläche des Statorbasisteils (1) sind, die Kühlanordnung ferner umfassend eine Rohranordnung (2), die eine Vielzahl von Rohren (6) hat, um ein Kühlungsfluid zu transportieren,
das Statorbasisteil (1) hat eine zylindrisch geformte Oberfläche, bereitgestellt mit einer Vielzahl tangentialer Rillen (5), wobei die Vielzahl von Rohren (6) in der Vielzahl der tangentialen Rillen (5) gebildet sind, wobei das Statorbasisteil (1) m Gruppen von n Rillen (5) umfasst, m und n sind ganzzahlige Zahlen und m>1.

2. Kühlanordnung nach Anspruch 1, wobei die Vielzahl von Rohren (6) Röhren umfasst und die Vielzahl von Rohren (6) hinsichtlich ihres ursprünglichen Querschnitts (2r) während der Montage verformt wurde.

3. Kühlanordnung nach Anspruch 2, wobei die Vielzahl von Rohren (6) aus Kupfer gefertigt sind.

4. Kühlanordnung nach Anspruch 2 oder 3, wobei die Vielzahl von Rohren (6) ursprünglich eine Abmessung in radialer Richtung (2r) haben, die größer ist als die Tiefe (d) der Vielzahl von Rillen (5).

5. Kühlanordnung nach Anspruch 1, wobei die Rohre (6) durch die Vielzahl der tangentialen Rillen (5) gebildet sind und eine abschließende Wand (8; 9) bündig ist mit der zylindrisch geformten Oberfläche des Statorbasisteils (1).

6. Kühlanordnung nach einem der Ansprüche 1 bis 5, wobei die Vielzahl der Statorspulenelemente (3) jeweils hervorstehende Elemente (3b) umfassen an Positionen, die der Vielzahl der tangentialen Rillen (5) entsprechen.

7. Kühlanordnung nach einem der Ansprüche 1 bis 6, wobei Montageelemente (11) in dem Statorbasisteil (1) zwischen jeder Gruppe der n Rillen (5) bereitgestellt sind, um die Vielzahl der Statorspulenelemente (3) zu befestigen.

8. Kühlanordnung nach einem der Ansprüche 1 bis 7, wobei jedes Rohr (6), wenn dieses montiert ist, den Kreisumfang des Statorbasisteils (1) umfasst und die Rohre (6) einer einzelnen Gruppe über 2π/n Radianten gegeneinander verschoben sind.

9. Kühlanordnung nach einem der Ansprüche 1 bis 8, ferner umfassend n Eingabe (Input)-Ausgabe (Output) Sammelleitungen (7), die Einlassseiten (15) und Auslassseiten (16) der Rohre (6) verschiedener Gruppen von Rohren (6) verbinden, wobei Einlassseiten (15) und Auslassseiten (16) sich in einer radialen Richtung des Statorbasisteils (1) erstrecken.

10. Kühlanordnung nach einem der Ansprüche 1 bis 9, wobei das Kühlungsfluid ein wasserbasiertes Kühlungsfluid ist.

11. Kühlanordnung nach einem der Ansprüche 1 bis 10, wobei die Vielzahl von Rohren (6) Teil eines Verdampfungs-basierten Kühlungssystems ist.

12. Verfahren zum Montieren eines Kühlungssystems in einem direkt angetriebenen Generator einer Windturbine, umfassend
Bereitstellen eines Statorbasisteils (1), das eine Vielzahl von tangentialen Rillen (5) in einer Oberfläche, die eine zylindrische Form hat, hat, wobei das Statorbasisteil (1) m Gruppen von n Rillen (5) umfasst, m und n sind ganze Zahlen und m>1;
Bereitstellen einer Vielzahl von Rohren (6) in der Vielzahl von tangentialen Rillen (5);
Befestigen einer Vielzahl von Statorspulenelementen (3) direkt auf und bündig mit der Oberfläche des Statorbasisteils (1).

13. Verfahren nach Anspruch 12, wobei der Zwischenraum zwischen dem Statorspulenelement (3) und einem Boden der tangentialen Rillen (5) geringer ist als der Durchmesser (2r) der Rohre (6) und hierdurch die Vielzahl von Rohren (6) in die Vielzahl von tangentialen Rillen (5) verformt.

14. Verfahren nach Anspruch 12, wobei die Vielzahl von Rohren (6) durch Verschließen der Vielzahl der tangentialen Rillen (5) gebildet sind.

15. Windturbine, die einen direkt angetriebenen Generator hat, umfassend eine Kühlanordnung nach einem der Ansprüche 1 bis 11.

## Revendications

1. Ensemble de refroidissement pour refroidir un générateur dans une éolienne, l'ensemble de refroidissement comprenant une partie de base de stator (1), une pluralité d'éléments de bobine de stator (3) du générateur étant fixée en fonctionnement à une surface de la partie de base de stator (1), l'ensemble de refroidissement comprenant en outre un ensemble de conduits (2) ayant une pluralité de conduits (6) pour transporter un fluide de refroidissement,
la partie de base de stator (1) ayant une surface de forme cylindrique pourvue d'une pluralité de gorges tangentielles (5), dans lequel la pluralité de conduits (6) est formée dans la pluralité de gorges tangentielles (5), dans lequel la partie de base de stator (1) comprend m groupes de n gorges (5), m et n étant des nombres entiers, et m>1.

2. Ensemble de refroidissement selon la revendication 1, dans lequel la pluralité de conduits (6) comprend des tubes, et la pluralité de conduits (6) ont été déformés par rapport leur section d'origine (2r) pendant l'assemblage.

3. Ensemble de refroidissement selon la revendication 2, dans lequel la pluralité de conduits (6) est en cuivre.

4. Ensemble de refroidissement selon la revendication 2 ou 3, dans lequel la pluralité de conduits (6) a à l'origine une dimension dans une direction radiale (2r) qui est supérieure à une profondeur (d) de la pluralité de gorges (5).

5. Ensemble de refroidissement selon la revendication 1, dans lequel les conduits (6) sont formés par la pluralité de gorges tangentielles (5) et une paroi de fermeture (8 ; 9) de niveau avec la surface de forme cylindrique de la partie de base de stator (1).

6. Ensemble de refroidissement selon l'une quelconque des revendications 1 à 5, dans lequel chacun de la pluralité d'éléments de bobine de stator (3) comprend des éléments d'extension (3b) en des emplacements correspondant à la pluralité de gorges tangentielles (5).

7. Ensemble de refroidissement selon l'une quelconque des revendications 1 à 6, dans lequel des éléments de montage (11) sont fournis dans la partie de base de stator (1) entre chaque groupe de n gorges (5) pour fixer la pluralité d'éléments de bobine de stator (3).

8. Ensemble de refroidissement selon l'une quelconque des revendications 1 à 7, dans lequel chaque conduit (6), lorsqu'il est monté, couvre la circonférence de la partie de base de stator (1), et les conduits (6) d'un seul groupe sont décalés de 2π/n radians les uns par rapport aux autres.

9. Ensemble de refroidissement selon l'une quelconque des revendications 1 à 8, comprenant en outre n collecteurs d'entrée-de sortie (7) reliant des côtés d'entrée (15) et des côtés de sortie (16) de conduits (6) de différents groupes de conduits (6), lesquels côtés d'entrée (15) et côtés de sortie (16) s'étendent dans une direction radiale de la partie de base de stator (1).

10. Ensemble de refroidissement selon l'une quelconque des revendications 1 à 9, dans lequel le fluide de refroidissement est un fluide de refroidissement à base d'eau.

11. Ensemble de refroidissement selon l'une quelconque des revendications 1 à 10, dans lequel la pluralité de conduits (6) fait partie d'un système de refroidissement à base d'évaporation.

12. Procédé d'assemblage d'un système de refroidissement dans un générateur à entraînement direct d'une éolienne, comprenant
la fourniture d'une partie de base de stator (1) ayant une pluralité de gorges tangentielles (5) dans une surface de forme cylindrique, dans lequel la partie de base de stator (1) comprend m groupes de n gorges (5), m et n étant des nombres entiers, et m>1.;
la fourniture d'une pluralité de conduits (6) dans la pluralité de gorges tangentielles (5) ;
le montage d'une pluralité d'éléments de bobine de stator (3) directement sur la surface de la partie de base de stator (1) et de niveau avec celle-ci.

13. Procédé selon la revendication 12, dans lequel l'espace entre l'élément de bobine de stator (3) et un fond des gorges tangentielles (5) est inférieur au diamètre (2r) des conduits (6), déformant ainsi la pluralité de conduits (6) dans la pluralité de gorges tangentielles (5).

14. Procédé selon la revendication 12, dans lequel la pluralité de conduits (6) est formée en fermant la pluralité de gorges tangentielles (5).

15. Eolienne ayant un générateur à entraînement direct, comprenant un ensemble de refroidissement selon l'une quelconque des revendications 1 à 11.
